Europäisches Patentamt

European Patent Office

Office européen des brevets

(11) Veröffentlichungsnummer: **0 279 209 B1**

## (12) EUROPÄISCHE PATENTSCHRIFT

(45) Veröffentlichungstag der Patentschrift: **24.06.92**

(21) Anmeldenummer: **88100929.4**

(22) Anmeldetag: **22.01.88**

(51) Int. Cl.⁵: **G11B 27/30**, G11B 20/18, G11B 27/10

(54) **CD-Spieler.**

(30) Priorität: **30.01.87 DE 3702693**

(43) Veröffentlichungstag der Anmeldung:
**24.08.88 Patentblatt 88/34**

(45) Bekanntmachung des Hinweises auf die
Patenterteilung:
**24.06.92 Patentblatt 92/26**

(84) Benannte Vertragsstaaten:
**AT BE CH DE ES FR GB IT LI LU NL SE**

(56) Entgegenhaltungen:
**EP-A- 0 037 487**
**EP-A- 0 114 508**
**EP-A- 0 181 020**
**FR-A- 2 507 045**

**RADIO FERNSEHEN ELEKTRONIK, Band 31,**
**Nr. 12, Dezember 1982, Seiten 796-799, Ost-**
**Berlin, DD; A. TROLL et al.: "Daten- und**
**Programmabspeicherung auf Heimmagnet-**
**bandgeräten"**

**PATENT ABSTRACTS OF JAPAN, Band 8, Nr.**
**228 (P-308)[1665], 19. Oktober 1984; & JP-**
**A-59 107 406 (TOSHIBA K.K.) 21-06-1984**

**PATENT ABSTRACTS OF JAPAN, Band 9, Nr.**
**157 (P-369)[1880], 2. Juli 1985; & JP-A-60 32**
**181 (SONY K.K.) 19-02-1985**

(73) Patentinhaber: **Deutsche Thomson-Brandt**
**GmbH**
**Hermann-Schwer-Strasse 3 Postfach 1307**
**W-7730 Villingen-Schwenningen(DE)**

(72) Erfinder: **Baas, Dieter**
**Sofienstrasse 10**
**W-7640 Kehl(DE)**

## Beschreibung

Die Erfindung betrifft ein Verfahren für einen CD-Spieler, bei dem nach Einlegen einer CD-Platte das Inhaltsverzeichnis der CD-Platte gelesen und mindestens ein Teil des Inhaltsverzeichnisses in einem Speicher gespeichert wird.

Welche Daten grundsätzlich auf einer CD-Platte gespeichert sind und wie sie der CD-Plattenspieler verarbeitet, ist in dem Aufsatz "Zusammenstellen eines CD-Programms" aus Funkschau, 15, 18.7.1986 auf Seite 26-28 beschrieben.

Jede CD-Platte enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Programmblöcke sind in der Regel Musikstücke, doch kann es sich z.B. auch um gesprochenen Text oder verschiedene Geräuschkulissen für die Vertonung von Filmen oder Dias handeln. Auf einer CD-Platte könne bis zu 99 Programmblöcke abgespeichert sein, jedoch finden sich auf einer CD-Platte mit Musik meist nur 10 bis 20 verschiedene Musikstücke.

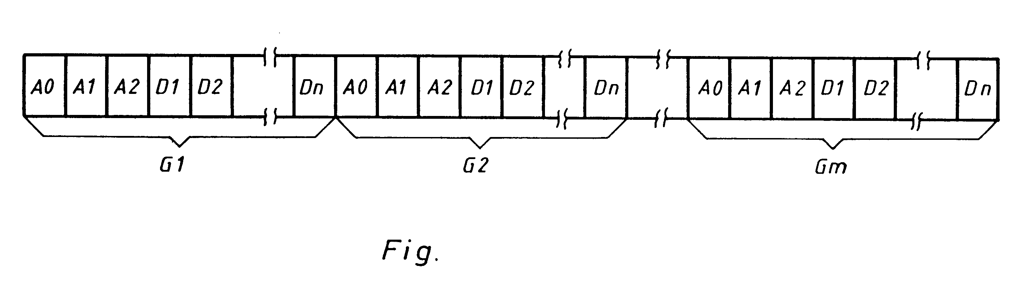

Das Inhaltsverzeichnis einer CD-Platte hat das in der Figur dargestellte Datenformat. Im ersten Block A0 steht der Titel des ersten Musikstücks, im zweiten Block A1 der des letzten Musikstücks und im dritten Block A2 ist die Gesamtspieldauer der CD-Platte angegeben. In den folgenden Blöcken D1 bis Dn stehen die Startzeiten der einzelnen n Musikstücke, die auf der CD-Platte aufgezeichnet sind. Die Blöcke A0, A1, A2, D1 bis Dn sind zu einer Gruppe zusammengefaßt, in der das Inhaltsverzeichnis der CD-Platte einmal vollständig gespeichert ist.

Der gesamte auf einer CD-Platte für das Inhaltsverzeichnis vorgesehene Speicherraum ist vollständig mit mehreren dieser unmittelbar aufeinander folgenden Gruppen G1-GM belegt, so daß die Daten des Inhaltsverzeichnisses der CD-Platte mehrfach redundant abgespeichert sind.

Beim Spielen der CD-Platte dienen die Startzeitpunkte D1 bis Dn, die bei mehr als drei Musikstücken den größten Teil der im Inhaltsverzeichnis gespeicherten Daten ausmachen, zur Berechnung der Anfangszeiten der einzelnen Musikstücke. Jedoch hat der Speicher nur bei teueren CD-Spielern genügend Speicherplätze, um das gesamte Inhaltsverzeichnis zu speichern. Bei einfacheren Geräten wird nur ein Teil des Inhaltsverzeichnisses, z.B. nur die ersten zehn von n Musikstücken abgespeichert. Im Speicher des CD-Spielers stehen dann die drei Blöcke A0 bis A2 sowie die Blöcke D1 bis D10. Die restlichen Blöcke D11 bis Dn können nicht mehr abgespeichert werden.

Zum Lesen eines Blocks von der CD-Platte und zum Speichern seiner Daten im Speicher, benötigt ein CD-Spieler etwa 40 ms. Sind auf einer CD-Platte tatsächlich 99 Musikstücke aufgezeichnet, so dauert das Lesen und Speichern der drei Blöcke A0, A1, A2 und der 99 Blöcke D1 bis D99 ungefähr $(3 + 99) \times 40$ ms $= 4{,}08$ s, wenn der die Daten abtastende Lichtstrahl sofort zu Beginn des Lesens zufällig am Anfang des ersten Blockes A0 einer Gruppe steht. Die Wahrscheinlichkeit für einen derartigen Glückstreffer ist aber sehr gering.

Am Beispiel eines CD-Spielers, der die Titel von zehn Musikstücken speichern kann, und einer zu spielenden CD-Platte mit fünfzig Musikstücken soll verdeutlicht werden, wie groß die Einlesezeit unter Umständen werden kann.

Zu Beginn des Einlesens möge der Lichtstrahl zufällig auf den Block D11 treffen, in dem die Startzeit des 11-ten Musikstückes gespeichert ist. Nun werden zuerst die vierzig Blöcke D11 bis D50 vom Lichtstrahl abgetastet, ehe bei der nächsten Gruppe mit dem Einlesen und Speichern der Blöcke A0 bis A2 und D1 bis D10 begonnen wird. Das Lesen der Blöcke D11 bis D50 dauert 40 x 40ms $= 1{,}6$s, das Lesen und Speichern der Blöcke A0 bis A2 und D1 bis D10 weitere 13 x 40ms $= 0{,}52$s, so daß insgesamt 1,6s $+$ 0,52s $= 2{,}12$s bis zum Abspielen des ersten Musikstücks vergehen.

Die Zeit bis zum Abspielen des ersten Musikstücks kann aber noch weiter verlängert werden, wenn ein Block z.B. der Block D10 infolge eines Kratzers auf der CD-Platte nicht lesbar ist. In diesem Fall liest der CD-Spieler weiter bis er zum Block D10 der nächsten Gruppe gelangt, der nun lesbar sein soll. Es werden deshalb die Blöcke D11 bis D50 und anschließend die Blöcke A0 bis A2 sowie D1 bis D10 der folgenden Gruppe gelesen. Zum Lesen dieser 40 + 3 + 10 = 53 Blöcke benötigt der CD-Spieler nochmals 53 * 50 ms $= 2{,}12$ s, so daß der Hörer rund 4s warten muß, ehe er das erste Musikstück zu hören bekommt.

Es ist deshalb Aufgabe der Erfindung, die Einlesezeit des Inhaltsverzeichnisses einer CD-Platte bei einem CD-Spieler zu verringern.

Die Erfindung löst diese Aufgabe dadurch, daß der die Daten abtastende Lichtstrahl von dem Block, auf den er zu Beginn des Lesevorgangs zufällig fällt, auf die Spur eines ersten Blocks gelenkt wird, um mit dem ersten Block beginnend die zu speichernden Blöcke zu lesen und zu speichern.

Einen zweite Lösung dieser Aufgabe, die im Anspruch 2 angegeben ist, besteht darin, daß mit dem Block beginnend, auf den der die Daten abtastende Lichtstrahl zu Beginn des Lesevorgangs zufällig fällt, die Daten bis zu dem Block, dessen Daten noch gespeichert werden sollen, gelesen und gespeichert werden und daß der Lichtstrahl von diesem Block auf die Spur des ersten Block gelenkt wird, um die Daten der restlichen Blöcke zwischen dem ersten Block und dem Block, auf den der Lichtstrahl zu Beginn zufällig fiel, zu lesen und zu speichern.

Anhand des eingangs genannten Beispieles eines CD-Spielers, der die Titel von zehn Musikstükken speichern kann, und einer CD-Platte mit fünfzig Musikstücken wird die Erfindung gemäß Anspruch 1 nun erläutert.

Zu Beginn des Einlesens möge der Lichtstrahl wieder auf den Block D11 fallen. Anstatt nun die Blöcke D11 bis D50 zu lesen und erst beim Block A0 der nächsten Gruppe mit dem Speichern der Daten zu beginnen, springt der Lichtstrahl innerhalb der Gruppe vom Block D11 zum Block A0 und beginnt dann sofort mit dem Lesen und Speichern der Blöcke A0 bis A2 und D1 bis D10.

Das Lesen und Speichern der dreizehn Blöcke A0 bis A2 und D1 bis D10 dauert gerade 13 x 40ms = 0,52s, während der Hörer beim Stand der Technik 2,12s auf das erste Musikstück warten muß. Die Zeit für den Sprung ist vernachlässigbar klein und kann im ungünstigsten Fall eine Umdrehung der CD-Platte - zwischen 110 und 130ms - betragen, da nur auf eine Spur genau und nicht auf Bruchteile einer Spur gesprungen werden kann.

Ist wie beim eingangs angegebenen Beispiel der Block D10 wegen eines Kratzers nicht lesbar, so wird der abtastende Lichtstrahl beim erfindungsgemäßen CD-Spieler in einem Sprung entweder auf den Block D10 einer vorhergehenden oder einer folgenden Gruppe gelenkt, um den Inhalt des Blocks D10 zu lesen und zu speichern. Weil die Dauer des Sprungs vernachlässigbar klein ist, wird bereits nach etwa 0,5s das erste Musikstück gespielt, während der Hörer beim Stand der Technik in diesem ungünstigen Fall bereits eine Wartezeit von 4,2s in Kauf nehmen muß.

Die Sprungweite für den abtastenden Lichtstrahl kann auf zwei Arten berechnet werden.

Die erste Lösung sieht vor, die Anzahl der Spuren aus der Anzahl der Blöcke zu berechnen, die zwischen den zwei Blöcken A0 und D11 bzw. D10 der einen Gruppe und D10 der folgenden Gruppe liegen. Aus der Zeit von etwa 110 bis 130 ms für eine Umdrehung der CD-Platte ergibt sich, daß die Länge von drei Blöcken etwa dem Abstand einer Spur entsprechen. Um vom Block D11 zum Block A0 zu springen, müssen 13 Blöcke übergangen werden, was etwa einem Abstand von 13 : 3 = 4 Spuren entspricht.

Da CD-Spieler ohnehin mit einem Mikroprozessor ausgestattet sind, ist es besonders vorteilhaft, den Mikroprozessor diese Berechnungen durchführen zu lassen, weil dabei kein zusätzlicher Aufwand an Hardware nötig ist, sondern nur die Programme für den Mikroprozessor erweitert werden müssen.

Auf einer CD-Platte ist parallel zu den Blöcken ein Zeitraster abgelegt, das mit jedem Block um 3 erhöht wird.

Eine vorteilhafte Ausgestaltung des erfindungsgemäßen CD-Spielers besteht darin, daß im CD-Spieler Gruppen mit fehlerhaften Blöcken in einem Speicher gespeichert werden. Hierzu werden z.B. die Anfangsziffer und die Endziffer, die der fehlerhaften Gruppe im Zeitraster zugeordnet sind, gespeichert. Fehlerhafte Blöcke oder Gruppen können z.B. durch Kratzer oder Fingerabdrücke auf der CD-Platte verursacht sein.

Anhand des folgenden Beispiels wird dieses Verfahren erläutert. Eine Gruppe bestehe aus zehn Blöcken. Die zweite Gruppe möge fehlerhafte Blöcke enthalten. Die Anfangsziffer der ersten Gruppe im Zeitraster ist 1, die Endziffer 10. Dem ersten Block der zweiten Gruppe mit den fehlerhaften Blöcken ist die Ziffer 11, dem letzten Block die Ziffer 20 zugeordnet. Diese beiden Ziffern, 11 und 20, werden gespeichert. Der CD-Spieler weiß nun, daß er beim erneuten Lesen des Inhaltsverzeichnisses die Blöcke mit den Ziffern 11 bis 20 nicht lesen soll, weil darunter fehlerhafte Blöcke zu finden sind.

Eine weitere vorteilhafte Weiterbildung sieht vor, daß fehlerhafte Gruppen und/oder Blöcke im CD-Spieler als fehlerhaft gekennzeichnet werden, damit der Lichtstrahl beim Lesen die fehlerhaften Blöcke bzw. Gruppen überspringen kann.

Es wird nun die im Anspruch 2 angegebene Lösung erläutert.

Zu Beginn möge der Lichtstrahl wieder auf den Block D3 fallen, und der CD-Spieler soll die Titel der ersten zehn Musikstücke speichern.

Es werden die Daten der Blöcke D3 bis einschließlich D10 gelesen und gespeichert. Anschließend wird der Lichtstrahl vom Block D10 auf den ersten Block A0 gelenkt, um die Daten der restlichen Blöcke A0, A1, A2, D1 und D2 zu lesen und zu speichern.

Auch bei der Erfindung gemäß Anspruch 2 kann der Lichtstrahl in vorteilhafter Weise beim Lesen eines fehlerhaften Blockes einer Gruppe in einem oder mehreren Sprüngen zum gleichen Block einer vorangehenden oder folgenden Gruppe springen.

Fehlerhafte Gruppen und/oder Blöcke können außerdem im CD-Spieler als fehlerhaft gekennzeichnet werden, damit der Lichtstrahl beim Lesen die fehlerhaften Blöcke bzw. Gruppen überspringen kann.

**Patentansprüche**

1. Verfahren für einen CD-Spieler, bei dem nach Einlegen einer CD-Platte, die einen Inhaltsverzeichnisbereich aus mehreren aufeinanderfolgenden identischen Gruppen (G1, G2, ..., Gm) aufweist, wobei jede Gruppe (G1, G2, ..., Gm) mehrere Blökke (A0, A1, A2, D1, ... , Dn) enthält, die zusammen das Inhaltsverzeichnis einmal vollständig beinhalten, mindestens ein Teil eines Inhaltsverzeichnisses einschließlich mindestens eines ersten Blockes (A0) der Gruppe gelesen und in einem Speicher gespeichert wird, **dadurch gekennzeichnet,** daß der die Daten abtastende Lichtstrahl von dem Block, auf den er zu Beginn des Lesevorgangs zufällig fällt, auf die Spur eines ersten Blocks (A0) gelenkt wird, um mit dem ersten Block (A0) beginnend die zu speichernden Blöcke zu lesen und zu speichern.

2. Verfahren für einen CD-Spieler, bei dem nach Einlegen einer CD-Platte, die einen Inhaltsverzeichnisbereich aus mehreren aufeinanderfolgenden identischen Gruppen (G1, G2, ..., Gm) enthält, wobei jede Gruppe (G1, G2, ..., Gm) mehrere Blöcke (A0, A1, A2, D1, ..., Dn) enthält, die zusammen das Inhaltsverzeichnis einmal vollständig beinhalten, mindestens ein Teil eines Inhaltsverzeichnisses einschließlich mindestens eines ersten Blockes (A0) der Gruppe gelesen und in einem Speicher gespeichert wird, **dadurch gekennzeichnet,** daß mit dem Block beginnend auf den der die Daten abtastende Lichtstrahl zu Beginn des Lesevorgangs zufällig fällt, die Daten bis zu dem Block, dessen Daten noch gespeichert werden sollen, gelesen und gespeichert werden und daß der Lichtstrahl von diesem Block auf die Spur des ersten Blocks (A0) gelenkt wird, um die Daten der restlichen Blöcke zwischen dem ersten Block (A0) und dem Block, auf den der Lichtstrahl zu Beginn zufällig fiel, zu lesen und zu speichern.

3. Verfahren nach Anspruch 1 oder 2, **dadurch gekennzeichnet,** daß der Lichtstrahl beim Lesen eines fehlerhaften Blockes einer Gruppe des Inhaltsverzeichnisses in einem oder mehreren Sprüngen zum gleichen Block einer folgenden Gruppe gelenkt wird.

4. Verfahren nach Anspruch 1 oder 2, **dadurch gekennzeichnet,** daß der Lichtstrahl beim Lesen eines fehlerhaften Blockes einer Gruppe des Inhaltsverzeichnisses in einem oder mehreren Sprüngen zum gleichen Block einer vorangehenden Gruppe gelenkt wird.

5. Verfahren nach Anspruch 1, 2, 3 oder 4, **dadurch gekennzeichnet,** daß zum Springen des Lichtstrahls von einem Block zum anderen die Anzahl der zwischen den beiden Blöcken liegenden Datenspuren berechnet wird.

## Claims

1. Method for a CD player in which, following the insertion of a compact disc having a track directory area consisting of a plurality of successive identical groups (G1, G2, ...,Gm) wherein each group (G1, G2, ..., Gm) contains a plurality of blocks (A0, A1, A2, D1, ..., Dn) which together contain the track directory completely once, at least one section of a track directory including at least a first block (A0) of the group is read-out and stored in a memory, characterised in that, the laser beam for scanning the data is diverted from the block on which it happens to rest at the commencement of a reading operation onto the track of a first block (A0) so that, beginning with this first block (A0), it then reads-out and stores those blocks which have to be stored.

2. Method for a CD player in which, following the insertion of a compact disc having a track directory area containing a plurality of successive identical groups (G1, G2, ..., Gm) wherein each group (G1, G2, ..., Gm) contains a plurality of blocks (A0, A1, A2, D1, ..., Dn) which together contain the track directory completely once, at least one section of a track directory including at least a first block (A0) of the group is read-out and stored in a memory, characterised in that, beginning with the block on which the laser beam for scanning the data happens to rest at the commencement of a reading operation, the data is read-out and stored up to that block whose data must still be stored and that the laser beam is diverted from this block onto the track of the first block (A0) so as to read-out and store the data from the remaining blocks between the first block (A0) and the block on which the laser beam happened to rest initially.

3. Method according to claim 1 or 2, characterised in that, upon reading a block containing errors in a group of the track directory, the laser beam is diverted in one or more jumps to the equivalent block in a succeeding block.

4. Method according to claim 1 or 2, characterised in that upon reading a block containing errors in a group of the track directory, the laser beam is diverted in one or more jumps to the equivalent block in a preceding block.

5. Method according to claim 1, 2, 3 or 4, characterised in that, for jumping the laser beam from one block to another, the number of data tracks lying between the two blocks is calculated.

## Revendications

**1.** Procédé pour un lecteur de disques compacts dans lequel, après avoir mis en place un disque compact qui présente une zone d'index constituée par plusieurs groupes identiques consécutifs (G1, G2, ..., Gm), chaque groupe (G1, G2, ..., Gm) contenant plusieurs blocs (A0, A1, A2, D1, ..., Dn) qui contiennent ensemble une fois l'index en entier, au moins une partie d'un l'index y compris au moins une partie d'un premier bloc (A0) du groupe est lue et mise en mémoire, **caractérisé en ce** que le faisceau lumineux, qui balaie les données, est dévié par le bloc, sur lequel il tombe par hasard au début de l'opération de lecture, sur la piste d'un premier bloc (A0) pour lire et mettre en mémoire les blocs à mettre en mémoire en commençant par le premier bloc (A0).

**2.** Procédé pour un lecteur de disques compacts dans lequel, après avoir mis en place un disque compact qui présente une zone d'index constituée par plusieurs groupes identiques consécutifs (G1, G2, ..., Gm), chaque groupe (G1, G2, ..., Gm) contenant plusieurs blocs (A0, A1, A2, D1, ..., Dn) qui contiennent ensemble une fois l'index en entier, au moins une partie d'un index y compris au moins une partie d'un premier bloc (A0) du groupe est lue et mise en mémoire, **caractérisé en ce** qu'en commençant avec le bloc sur lequel le faisceau qui balaie les données tombe par hasard au début de l'opération de lecture les données sont lues et mises en mémoire jusqu'au bloc dont les données doivent encore être mises en mémoire et que le faisceau lumineux est dévié par ce bloc sur la piste du premier bloc (A0) pour lire et mettre en mémoire les données du reste des blocs entre le premier bloc (A0) et le bloc sur lequel le faisceau qui balaie les données est tombé par hasard au début de l'opération de lecture.

**3.** Procédé selon la revendication 1 ou 2, **caractérisé en ce** que le faisceau lumineux est dévié, à la lecture d'un bloc défectueux d'un groupe de l'index, en un ou plusieurs sauts au même bloc d'un groupe suivant.

**4.** Procédé selon la revendication 1 ou 2, **caractérisé en ce** que le faisceau lumineux est dévié, à la lecture d'un bloc défectueux d'un groupe de l'index, en un ou plusieurs sauts au même bloc d'un groupe précédent.

**5.** Procédé selon la revendication 1, 2, 3 ou 4, **caractérisé en ce** que le nombre des pistes de données qui se situent entre les deux blocs est calculé pour faire sauter le faisceau lumineux d'un bloc à l'autre.

| A0 | A1 | A2 | D1 | D2 | | Dn | A0 | A1 | A2 | D1 | D2 | | Dn | A0 | A1 | A2 | D1 | D2 | | Dn |

G1

G2

Gm

*Fig.*